# EUROPEAN PATENT APPLICATION

(11) **EP 4 576 838 A1**
(43) Date of publication of application: **25.06.2025**
(21) Application number: 23218833.4
(22) Date of filing: 20.12.2023
(51) Int. Cl.: H04W 4/02, H04W 4/029, B25F 5/00, H04W 52/02, H04W 4/80, G06K 19/07

(54) **TAG, ASSET WITH TAGS, ASSET MANAGEMENT SYSTEM, AND METHOD FOR CONTROLLING THE SENDING OF COMMUNICATION PACKETS OF A TAG**

(71) Applicant: Hilti Aktiengesellschaft, 9494 Schaan (LI)
(72) Inventor: Malik, Muhammad Salman, 86159 Augsburg (DE); Salim, Adhil Mubarak, 86899 Landsberg Am Lech (DE); Rackl, Yasemin, 82327 Tutzing (DE)
(74) Representative: Hilti Aktiengesellschaft Corporate Intellectual Property

(57) **Abstract**

A method for controlling sending of communication packets of a tag comprising:
sending communication packets at a first sending rate by the tag; monitoring a motion state of the tag and/or a use state of a power tool, the tag is attached to or part of; sending the communication packets by the tag at a second sending rate, the second sending rate being higher or lower than the first sending rate, after a change in the motion state of the tag and/or a change in the use state of the power tool has been detected by the monitoring.

## Description

### FIELD OF INVENTION

The present invention relates to a tag for an asset management system, to an asset with the tag, to an asset management system, to a method for controlling sending of communication packets of a tag, and to a computer program product to carry out the method.

### BACKGROUND OF THE INVENTION

Asset management solutions or systems comprise assets with tags that periodically send communication packets, e.g., RF beacons such as advertising packets, via wireless communication. Devices, e.g., gateways or mobile phones, can receive these communication packets. When a communication packet from a tag is received, the receiving device knows that the tag, and therefore the tagged asset, is in its vicinity.

An example for an asset management system is described in "Hilti ON!Track Proaktives Tracking - Immer einen Schritt voraus", https://www.youtube.com/watch?v=b0y5elXzf1Y, retrieved November 15, 2023, Hilti Osterreich.

Gateways, with power supply from the grid, as receiving devices, often scan permanently for advertising packets. Due to their limited battery capacity, mobile phones or battery powered gateways may only scan on demand or less frequently. Tags have to send their communication packets often enough to fulfil requirements on timeliness of the information of the asset management system. When a mobile phone is used as receiving device, tags should send their communication packets often enough to be included in the scan of the mobile phone. E.g., a user may not want to wait for several minutes for a tag sending only every 5 minutes an advertising packet. However, sending frequently communication packets is consuming energy, and can reduce the lifetime of a tag with a non-exchangeable battery.

It is one object of the present invention to provide an improved tag and method for controlling the sending of communication packets of tags.

### DISCLOSURE OF THE INVENTION

A tag for an asset management system is comprising: a wireless communication unit, configured to send communication packets, in particular RF beacons, e.g. advertising packets, with an adjustable sending rate; a movement detection unit, configured to detect a movement of the tag and/or a use of a power tool or a power tool battery pack the tag is part of or attached to; one or more first processors of the tag, configured to instruct sending the communication packets with at least a first and a second sending rate, e.g., an RF beaconing rate, in dependence of detected changes of the movement or the use of the tag.

A tag being able to send with an adjustable sending rate, e.g. with two sending rates, one being a higher sending rate and one being a lower sending rate, may be set only on the higher sending rate, when necessary, e.g., for the asset management system. With a movement detection unit, the tag may identify situations where a lower sending rate is sufficient and/or where a higher sending rate is preferable. E.g., when a tag is not moved, there will be also no changes to the location of the tag in the asset management system, however, when the tag is moved, the location in the asset management system may be changed. While an asset such as a power tool is used, it is also usually not transferred to another location in the asset management system. When no change to the location in the asset management system is to be expected, the sending rate may be reduced to, e.g., to the lower sending rate. A tag may be part of a power tool or a power tool battery pack and can be integrated in its electronic or a tag may be attached to a power tool or a power tool battery pack.

In an embodiment, the movement detection unit comprises an acceleration sensor, a vibration sensor, a GPS sensor, an orientation sensor, a gyro sensor, and/or a magnetometer. The kind of movement may be less relevant than the simple information that there is some kind of activity with the tag. Vibration of the tag may indicate a use of the asset the tag is attached to or a movement. The tag may be configured in a way, e.g., using artificial intelligence, to distinguish between vibrations due to movements and vibrations due to use. The movement detection unit may also receive information on use of the power tool the tag is attached to from the power tool itself, e.g., via an interface or being integrated with the power tool.

The wireless communication unit may comprise a radiofrequency sender, e.g. a Bluetooth, Zigbee, Z-Wave, or LoRa sender. The wireless communication unit may additionally comprise a radiofrequency receiver, such as a Bluetooth, Zigbee, Z-Wave, or LoRa receiver.

In an embodiment, the tag is further comprising a battery, particularly, a coin cell, and/or a memory. Coin cells, also known as button cells or coin batteries, are a useful power source for the tag. The battery may be exchangeable or not exchangeable, the battery may also be rechargeable or non-rechargeable. In particular for batteries, which cannot be exchanged, a low power consumption is desirable.

Furthermore, an asset is proposed, in particular a power tool, more particular a saw, a driver, a wrench, a rotary hammer, a drill, or a screwdriver, or a or power tool battery pack with the described tag, particularly, wherein the tag is attached to, particularly glued to, or part of the asset.

On a construction site there may be hundreds of power tools, which may also be used at other construction sites. To have an overview which power tools are on which site, tags can be attached to the power tools. Tags can be glued to the power tools or can be part of a power tool, e.g. embedded in the power tool and, e.g., integrated in its electronics. Usually, tags have non-exchangeable batteries to avoid servicing tags in the field, which might be burdensome, given the number of power tools on a construction site. If the lifetime of such a tag exceeds the typical service or exchange interval of the power tool, no field service due to the tag is necessary.

Alternatively, in particular if a tag is part of a power tool or a power tool battery pack, the tag may use, alternatively or additionally to an own battery, the battery pack as power source or a power source of the power tool, e.g., the battery pack of the power tool.

Furthermore, an asset management system is proposed, comprising: the described tag and/or the described asset; and a gateway and/or a mobile device, particularly, a mobile phone, a tablet, or a laptop, configured to scan for communication packets of the tag.

Gateways or mobile devices may be used in an asset management system to communicate with the assets, e.g., detect which assets identified with their tag are in their vicinity, and to communicate with a backend of the asset management system, e.g., reporting which assets are in their vicinity. The backend can process data from one or more gateways and provide information to a user, e.g., provide the information on which construction site a specific power tool is. Gateways are often stationary to a site, e.g., in a warehouse, at least over a certain time period of at least several weeks and are supplied with electricity from the grid. Gateways may also be installed in vans or containers where they may derive power from a battery or an external source. E.g., depending on the power source, a gateway may scan for assets continually or periodically. The interval between scans may depend on the power source. When the distance of an asset to a gateway is increased, after a certain distance, depending on the sending power of the asset, the gateway will not be able to find the asset anymore and can report a removal of the asset from the location covered by the gateway. Similarly mobile devices may be used to scan for assets, respectively the associated tags, in their vicinity.

While an asset is not moved, no change is to be expected and the sending rate of the tag of the asset may be reduced. When the asset is moved, it might be advantageous to increase the sending rate, the number of communication packets per time, of the tag of the asset, e.g., to be better and/or faster detectable by another gateway or by a mobile device.

According to a further aspect, a method for controlling sending of communication packets, e.g., RF beacons such as advertising packets, of a tag is proposed, comprising: sending communication packets at a first sending rate by the tag; monitoring a motion state of the tag and/or a use state of a power tool, the tag is attached to or part of; sending the communication packets by the tag at a second sending rate, the second sending rate being higher or lower than the first sending rate, after a change in the motion state of the tag and/or a change in the use state of the power tool has been detected by the monitoring.

The method allows to adjust a setting for the sending rate of a tag, e.g., optimized, to its environment. The change of the motion state of the tag or the use state of a power tool, to which the tag is associated, is monitored and is an input for determining the sending rate. Based on the specific system, in which the tag is used, the method may help to increase the lifetime of the tag, in particular, for a tag with a not exchangeable battery. The method may also reduce noise created by a frequent sending of communication packets, so-called beacons. The method may be implemented in various ways, some discussed in embodiments. The tag itself may monitor its movement. There are at least two different sending rates which may be selected for sending the communication packets.

In an embodiment, a lower sending rate is increased to a higher sending rate, if the motion state of the tag changes from not moving to moving; and the higher sending rate is decreased to the lower sending rate, if the motion state of the tag changes from moving to not moving. Lower sending rate and higher sending rate just describe a relation of the two sending rates, having a longer time period between communication packets, and having a shorter time period between communication packets. Usually, if a tag and/or the asset associated with a tag, e.g., a power tool or its accessories, is not moved, a change of the location is not likely, and the tag and/or asset stays at the same location to which it is assigned in an asset management system. In a situation where no movement has to be expected, a longer time period between communication packets may be acceptable, as no new or changed information, e.g., that the tag is at a location, is transferred. When a movement is detected, the probability for the tag and/or the associated asset to be relocated is higher. To track this relocation, the sending rate for the communication packets is increased and only after the movement has stopped, the sending rate is reduced again.

In an embodiment, a lower sending rate is increased to a higher sending rate for a predetermined first time period, if the motion state of the tag changes from not moving to moving; the lower sending rate is increased to the higher sending rate for a predetermined second time period, if the motion state of the tag changes from moving to not moving; and the higher sending rate is decreased to the lower sending rate after the predetermined first and/or second time period. There may be environments where only when the motion state is changed a higher sending rate may be necessary. E.g., in an asset management system operating on a van, after the van starts moving no new assets can be brought on board of the van. Therefore, in the middle of the drive of a van the sending rate of a tag may be lower and only when the van arrives at its destination the sending rate may be increased again. After no movement at the destination for a predetermined time, the sending rate may be lowered again.

In an embodiment, the lower sending rate is not increased and/or the higher sending rate is not decreased for a predetermined waiting period, after the change of the motion state of the tag has been detected, in particular, wherein the lower sending rate is not increased for the waiting period, after the change of the motion state from moving to not moving has been detected; and optionally, the lower sending rate is increased and/or the higher sending rate is decreased only if no further change of the motion state of the tag is detected during the waiting period. To avoid changing the sending rate for a lot of short and intermittent changes of the motion state, a waiting period may be introduced and only if no further change happens in the waiting period, the sending rate is changed. The waiting period may also support certain environments, such as the van, where the interesting time for determining assets at a location is after a movement has started or after a movement has stopped.

In an embodiment, a higher sending rate is decreased to a lower sending rate, if the use state of the tag changes from not used to used; and the lower sending rate is increased to the higher sending rate, if the use state of the tag changes from used to not used.

Lower sending rate and higher sending rate just describe a relation of the two sending rates, having a longer time period between communication packets, and having a shorter time period between communication packets. Usually, if a tag and/or the asset associated with a tag, e.g., a power tool or its accessories, is used, a change of the location is not likely, and the tag and/or asset stays at the same location to which it is assigned in an asset management system. E.g., a drill will not be moved from one construction site to another construction site, while drilling. In a situation where no movement has to be expected, a longer time period between communication packets may be acceptable, as no new or changed information, e.g., that the tag is at a location, is transferred. When no use of the power tool is detected, the probability for the tag and/or the associated asset to be relocated is higher. To track this relocation, the sending rate for the communication packets is increased and only after the use has started again, the sending rate is reduced again.

In an embodiment, a higher sending rate is decreased to a lower sending rate for a predetermined third time period, if the use state of the tag changes from used to not used; the higher sending rate is decreased to the lower sending rate for a predetermined fourth time period, if the use state of the tag changes from not used to used; and the lower sending rate is increased to the higher sending rate after the predetermined third and/or fourth time period.

In an embodiment, the higher sending rate is not decreased and/or the lower sending rate is not increased for a predetermined waiting period, after the change of the use state of the tag has been detected, in particular, wherein the lower sending rate is not increased for the waiting period, after the change of the use state from used to not used has been detected; and optionally, the lower sending rate is increased and/or the higher sending rate is decreased only if no further change of the motion state of the tag is detected during the waiting period. To avoid changing the sending rate for a lot of short and intermittent changes of the use state, a waiting period may be introduced and only if no further change happens in the waiting period, the sending rate is changed. The waiting period may also support certain environments, where the interesting time for determining assets at a location is after a use has been started or after a use has been stopped.

The described method may be used for managing assets. The method may further comprise scanning for communication packets of one or more tags, particularly by a gateway.

In an embodiment, the described method is using the described tag, the described asset, and/or the described asset management system.

Furthermore, a computer program product is proposed, comprising instructions which, when the program is executed by one or more processors of a described tag, cause the processors to carry out the described method with the described tag, the described asset, and/or the described asset management system.

The various embodiments of the method for controlling the sending of communication packets of tags may be combined with the disclosed tags, assets, asset management system, and/or the disclosed computer program product.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE DRAWINGS

Further embodiments, features and advantages of the present invention will become apparent from the subsequent description and dependent claims, taken in conjunction with the accompanying drawings, in which:
- Fig. 1: shows schematically the situation of a warehouse with a gateway for determining which assets are in the vicinity of the gateway;
- Fig. 2: shows the general situation of a vehicle 20 with an asset determination system;
- Fig. 3: shows a process flow for a method for controlling a sending of communication packets of tags;
- Fig. 4: shows an example of tag movement based adaptive beaconing, where start of a movement triggers an increased beaconing rate;
- Fig. 5: shows an example of tag movement based adaptive beaconing where start and stop of a movement triggers an increased beaconing rate;
- Figs. 6 a, b: show an example of tag movement based adaptive beaconing, where start and stop of a movement triggers an increased beaconing rate, adapted for a vehicle;
- Figs. 7 a, b, c: show an example of tool usage based adaptive beaconing; and
- Fig. 8: shows a schematic representation of a tag.

In the Figures, like reference numerals designate like or functionally equivalent elements, unless otherwise indicated.

### DETAILED DESCRIPTION OF ILLUSTRATIVE EMBODIMENTS

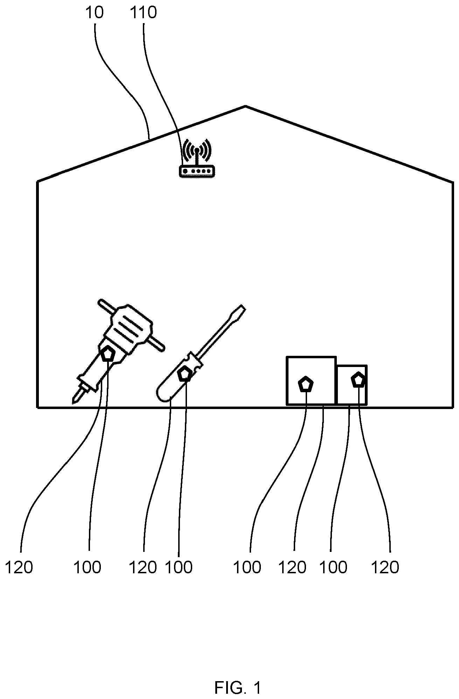

Fig. 1 shows schematically the situation of a warehouse 10 with a gateway 110 for determining which assets 120 are in the vicinity of the gateway 110 and thus at the location assigned to the warehouse 10 in an asset management system. The gateway 110 reports to a backend of the asset management system the tags 100, from which the gateway 110 receives communication packets, e.g. RF beacons, particularly under Bluetooth, Zigbee, Z-Wave, or LoRa standards, and the tags 100 can be related to assets 120 in the asset management system. The tags 100 and or assets 120 with integrated tags 100 can send periodically communication packets, to advertise that they are present, so-called RF beacons. Tags 100 can be attached, e.g., glued, to an asset 120. Tags 100 may also be embedded in the electronics of an asset, e.g., in the electronics of a power tool or a battery pack. The Bluetooth standard may be used for the sending of the RF beacons as advertising packets. The asset management system can inform users about the assets 120 in the warehouse 10. Sending RF beacons consumes energy, e.g., from the limited power supply, e.g., a coin cell, of a tag 100.

Usually, the tags 100 send RF beacons periodically at regular intervals, e.g., every 5 seconds, 10 s, or 60 s, irrespective whether they are stationary present at the same location and scanned by the gateway 110 or if they are recently moved in or moved out of the range of the gateway 100, e.g., moved in or out of the warehouse 10. While assets 120 are stationary at the warehouse 10, no frequent updates might be necessary, thus saving energy. However, if an asset 120 is removed from the warehouse 10, a prompt information to the asset management system may be desirable. This can be supported by increasing the sending rate for beacons of a tag 100 associated to an asset 120, when the asset 120 is moved.

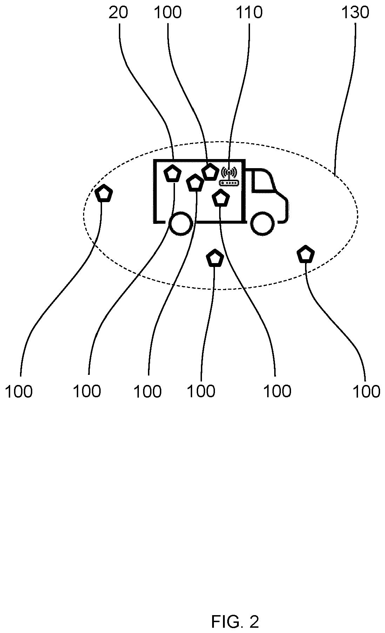

Fig. 2 shows the general situation of a vehicle 20 with an asset determination system. There is a gateway 110 on the vehicle. The gateway 110 scans for Bluetooth beacons from assets 120 or tags 100 on assets 120. There are tags 100 representing assets 120, which are within the vehicle 20. There are tags 100 representing assets 120, which are outside of the vehicle, however, all shown tags 100 are within the detection range of the gateway 110, i.e., the signal strength of the tags 100 is high enough to be detected by the gateway 110. The asset determination system can only determine that the shown tags 100 are in the detection range 130 of the gateway 110. An asset management system may use the information to inform a user about assets 120 present or missing at a given location.

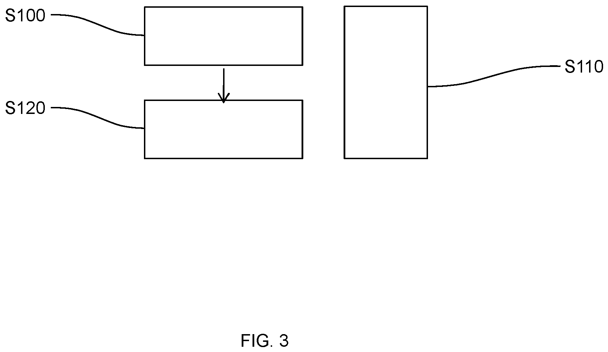

Fig. 3 shows a process flow for a method for controlling sending of communication packets of a tag. In step S100 communication packets are sent at a first sending rate by a first tag 100. The communication packets may be sent by a wireless communication unit 300 of the tag 100. In parallel, in step S110, a motion state of the tag 100 and/or a use state of a power tool, the tag 100 is attached to or part of, is monitored. This can be done by sensors of or an interface to a movement detection unit 330 of the first tag 100. The communication packets may include identification information of the tag 100, however, may also comprise further information such as temperature, position, movement, vibration. If in the parallel step S110 a change in the motion state of the tag 100 is detected, the tag 100 adjusts the sending rate to a second sending rate, different from the first sending rate, and sends in step S120 the communication packets with the second sending rate. Of course, the parallel monitoring of the motion or use state of step S110 may be also realized by alternating sending of one or more communication packets and monitoring the motion state, e.g., monitoring vibrations and or acceleration.

The tag 100 or the power tools sending RF beacons, thus can use changes of motion or use state, such as start and end of a movement or usage of the associated power tool, to adjust the intervals used to send RF beacons.

If a tag 100 or the associated asset 120 is present at its location and does not detect any movement, the tag 100 or the asset 120 can use longer intervals between its beacons, enabling to save battery energy. The longer intervals should still enable the tag 100 or asset 120 to be scanned by a gateway 110 in the vicinity of the tag 100 or asset 120 from time to time, to enable the asset management system to function properly, i.e., to mark the asset 120 as present at the location.

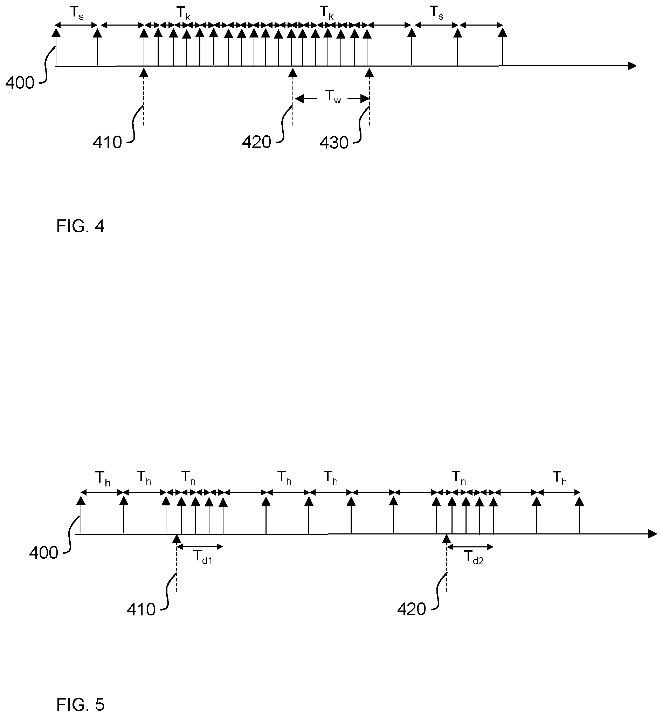

Fig. 4 shows an example of tag movement based adaptive beaconing where start of a movement triggers an increased beaconing rate. A tag 100 attached to an asset 120 shows two different states: In the static state, the tag 100 attached to the asset 120 is placed idle without change in position or not being used. In the kinetic state, the tag 100 attached to the asset 120 is being transported, moved, carried, or being used. The solid arrows 400 represent the communication packets sent on a timeline.

To save battery energy, the tag 100 beacons at longer intervals during static state of the asset 120 as the information on location transmitted by the tag 100 does not change. When the tag 100 detects motion, e.g. a vibration, the beacon interval is set to shorter beacon interval. This enables a gateway 110 within the detection range 130 to capture important information such as when the asset 120 leaves the warehouse 10 and when the asset 120 comes back to the warehouse 10. Setting the beacon to shorter intervals during motion also enables a van gateway 110 to efficiently scan the assets 120 in the van 20 during transport without any delay.

This may be implemented with the following parameters:
- Tₛ is a beacon interval in the static state and may be, e.g., between 60 seconds and 240 s;
- Tₖ is a beacon interval in the kinetic state and may be, e.g., between 5 s and 10 s; and
- T_{w} is a wait time to revert from Tₖ to Tₛ and may be between 120 s and 300 s.

If the tag is in the static state, the beacon interval may be set to Tₛ = 60 s. When the tag has detected motion or vibration at the time 410, the beacon interval will be changed to Tₖ =7 s and stays in this beacon interval settings until no movement is detected for a continuous waiting period T_{w} = 300 seconds. I.e. when the movement stops at the time 420, the beaconing interval will be increased only at the time 430.

Fig. 5 shows an example of tag movement based adaptive beaconing where start 410 and stop 420 of a movement triggers an increased beaconing rate. The beacon interval is changed when the tag 100 has detected the start of motion 410 or the end of motion 420 and the change is reversed after a predetermined time.

This may be implemented with the following parameters:
- if the tag 100 detects a start of a movement, it sends its RF beacons at intervals Tₙ, e.g., Tₙ is between 5 s and 10 s;
- the tag 100 continues to send its RF beacons at this rate for a predetermined time period T_{d1};
- if the tag 100 detects that the motion has stopped, it starts to send its beacon at intervals Tₙ again;
- the tag 100 continues to send its RF beacons at this rate for a predetermined time period T_{d2};
- after the time periods T_{d1} and T_{d2}, the tag 100 starts to send its RF beacons at intervals Tₕ, e.g., Tₕ being between 60 s and 300 s.

In an asset management system, the gateway 110 may determine that the tag 100 has gone out of it range if it does not scan any beacon for a duration T_{L}. The intervals Tₛ or Tₕ used by the tag 100 must be short enough compared to T_{L}, e.g., shorter than 1/5 or 1/10 of T_{L}, to ensure that the gateway 110 receives at least one beacon from the tag 100 to determine that it is still present at its location.

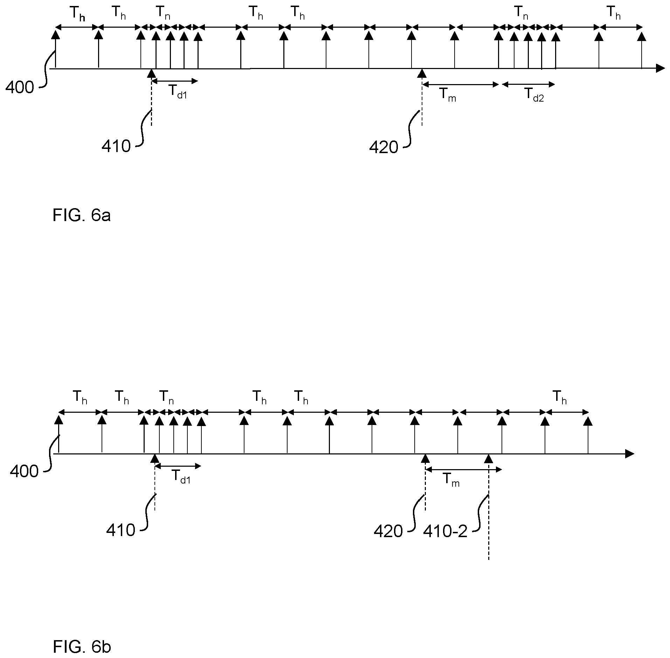

Figs. 6 a and b show an example of tag movement based adaptive beaconing, where start 410 and stop 420 of a movement triggers an increased beaconing rate, which is adapted for a vehicle 20. The embodiment of Fig. 6 a and b is based on the example described in relation to Fig. 5 and the parameters may be the same as in Fig. 5. The tag 100 detects a motion start 410 when a vehicle 20 starts to move and it detects a motion stop 420 when the vehicle 20 stops. When the tag 100 detects the motion stop 420, it waits, different to the example in Fig. 5, for a time period Tₘ before switching to sending its beacons at interval Tₙ for a predetermined time period T_{d2}.

If now the tag 100 detects a motion start 410-2 before the interval Tₘ has expired, the tag 100 cancels the switching to send beacons at interval Tₙ, however, the tag 100 continues to send the beacons at interval Tₕ, as shown in Fig. 6 b.

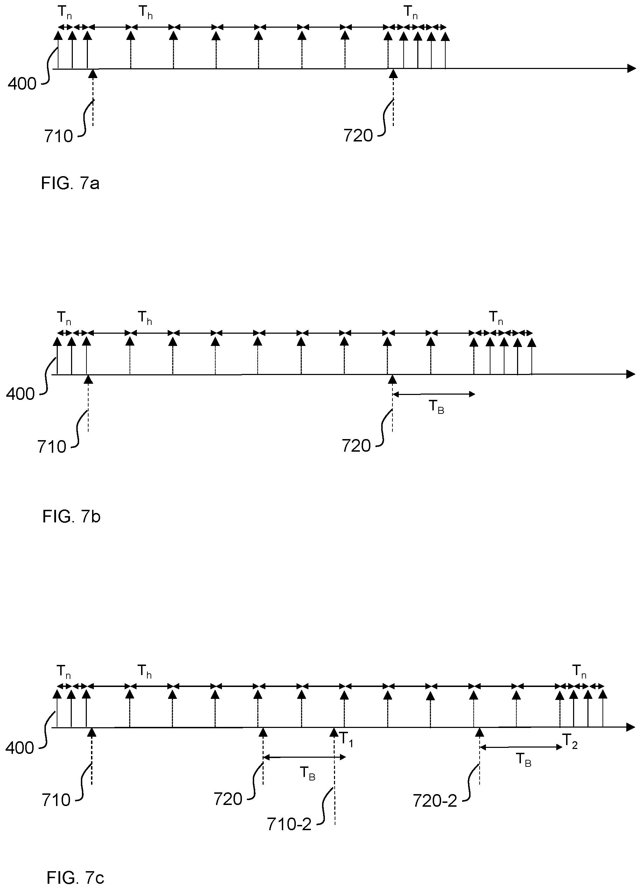

Figs. 7 a, b, and c show an example of a tool usage based adaptive beaconing. A tag 100 may have an algorithm to distinguish the transport or carrying vibration from power tool usage vibrations. The information on tool usage may also come directly from the power tool, e.g., based on turning its motor on or off, and the information is communicated to the tag 100 to enable it to adjust the intervals to send its RF beacons.

The embodiment may be implemented, as shown in Fig. 7a, with the following parameters:
- If a tag 100 detects a start of usage 710, it starts to send its RF beacons at intervals Tₕ, e.g., Tₕ between 60 s, and 120 s;
- The tag 100 continues to send its RF beacons at this longer interval during usage of its attached tool;
- if the tag 100 detects that the usage has stopped 720, it starts to send its beacon at intervals Tₙ, e.g., Tₙ between 5 s and 10 seconds.

In an asset management system, a gateway 110 may determine that the tag 100 has gone out of it range if it does not scan any beacon for a duration T_{L}. The intervals Tₛ or Tₙ used by the tag 100 must be short enough compared to T_{L}, e.g., shorter than 1/5 or 1/10 of T_{L}, to ensure that the gateway 110 receives at least one beacon from the tag 100 to determine that it is still present at its location.

Some power tools may only be used for a short time period, e.g., power tools used for drilling. This may result in frequent switching between sending beacons with longer interval and shorter interval. Figs. 7 b and c show how this frequent switching may be reduced. After the stop of usage 720 has been identified by the tag 100, in Fig. 7 b, the tag 100 starts to send its beacons at intervals Tₙ only after the predetermined time period T_{B}, a stay back timer, has passed since the usage has stopped. Fig. 7 c shows now that, if the next usage starts 710-2 within the stay back timer interval, i.e., less than T_{B} time since the last usage has ended, the power tool cancels the switching to sending beacons with the intervals Tₙ and continues to send beacons with the intervals Tₕ. Fig. 7 c depicts that at time T₁, the tag 100 detects a start of another usage 710-2 while the previous end of usage 720 was less than the interval T_{B} ago. Therefore, the tag 100 cancels switching to using shorter intervals Tₙ and continues to send its beacons at longer intervals Tₕ.

At time T₂, the tag 100 switches to using short intervals Tₙ to send its beacons as it did not detect any new start of usage 710 within interval T_{B} since the last usage stopped 720-2.

The tag 100 may be integrated in the electronics of an asset 120, e.g., a power tool. The logic to detect a motion start or motion stop may be implemented for the method also in a separate module, e.g., an electronics module, outside the tag.

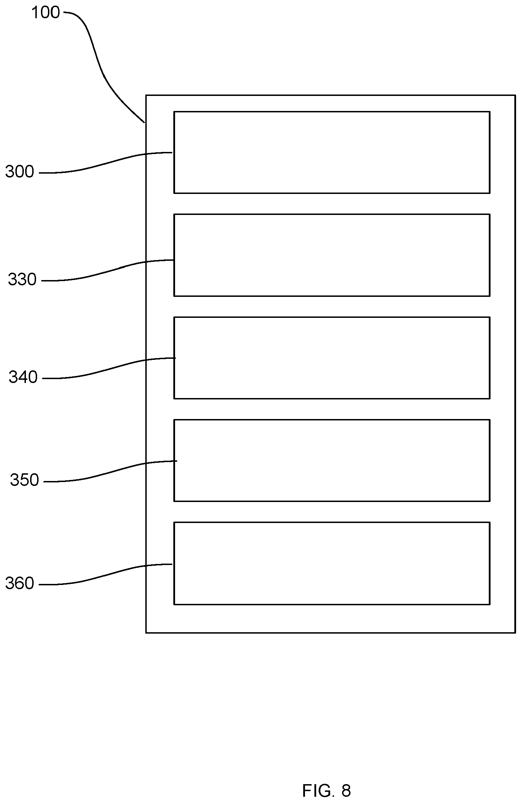

Fig. 8 shows a schematic representation of a tag 100. The tag 100 comprises a wireless communication unit 300, which is configured to send communication packets with an adjustable sending rate, at least a lower sending rate and a higher sending rate are selectable for adjusting the sending rate.

The tag 100 comprises a movement detection unit 330, configured to detect a movement and or a use of the tag 100. The movement detection unit 330 may comprise an acceleration sensor, a vibration sensor, a GPS sensor, an orientation sensor, a gyro sensor, and/or a magnetometer. The movement detection unit 330 is enabled by such a sensor to identify a movement of the tag 100, and its associated asset 120. There is no necessity to identify, e.g., a direction of the tag 100. It is sufficient to determine whether there is any movement. A use of a power tool, to which the tag 100 is attached to or of which the tag 100 is part of, may be determined from a specific movement of the tag 100, e.g., from a vibration signature. The tag 100 may, e.g., use artificial intelligence to differentiate between a use of a power tool and a change of the location of a power tool. The tag 100 may also have an interface to the power tool to get information on use of the power tool.

The tag 100 comprises one or more processors 340. The processors 340 of the tag 100 are configured to instruct sending the communication packets with the lower or higher sending rate. The processors may be realized in various ways, e.g., as ASICS. Additionally, a memory 350 may be included in the tags 100. The memory 350 may be used to store settings, such as the first and or second sending rate, or a waiting period.

The tag 100 comprises a battery 360, powering the wireless communication unit 300, the sensors of the movement detection unit 330, the processors 340, and the memory 350. The battery 360 may be a non-exchangeable coin cell.

In alternative embodiments, the tag 100 may be connected to the power source of a power tool and, e.g., use the power tool battery or the tag may be part of or connected to a power tool battery pack.

### REFERENCE NUMERALS

- 10: warehouse
- 20: van
- 100: tag
- 110: gateway
- 120: asset
- 130: detection range
- 300: wireless communication unit
- 330: movement detection unit
- 340: processor
- 350: memory
- 360: battery
- 400: communication packets
- 410, 410-2: start of movement
- 420: stop of movement
- 430: decrease beaconing rate
- 710,710-2: start of usage
- 720, 720-2: stop of usage

- S100: sending communication packets at first sending rate
- S110: monitoring movement and/or use state
- S120: sending communication packets at second sending rate

## Claims

1. A tag (100) for an asset management system comprising:
- a wireless communication unit (300), configured to send communication packets with an adjustable sending rate;
- a movement detection unit (330), configured to detect a movement of the tag (100) and/or a use of a power tool or power tool battery pack, the tag (100) is part of or attached to;
- one or more first processors (340) of the tag (100), configured to instruct sending the communication packets with at least a first and a second sending rate in dependence of detected changes of the movement or the use of the tag (100).

2. The tag (100) according to claim 1, wherein the movement detection unit (330) comprises an acceleration sensor, a vibration sensor, a GPS sensor, an orientation sensor, a gyro sensor, and/or a magnetometer and/or wherein the wireless communication unit (300) comprises a radiofrequency sender, particularly a Bluetooth, Zigbee, Z-Wave, or LoRa sender.

3. The tag (100) according to any of the claims 1 to 3, further comprising a battery (360), particularly, a coin cell, and/or a memory (350).

4. An asset (120), in particular a power tool or a power tool battery pack, more particular a saw, a driver, a wrench, a rotary hammer, a drill, or a screwdriver, with a tag (100) according to any of the claims 1 to 3, particularly, wherein the tag (100) is attached to, particularly glued to, or part of the asset (120).

5. An asset management system comprising:
- a tag (100) according to any of the claims 1 to 3 and/or an asset (120) according to claim 4; and
- a gateway (110) and/or a mobile device, particularly, a mobile phone (120), a tablet, or a laptop, configured to scan for communication packets of the tag (100).

6. A method for controlling sending of communication packets of a tag (100) comprising:
- sending (S100) communication packets at a first sending rate by the tag (100);
- monitoring (S110) a motion state of the tag (100) and/or a use state of a power tool, the tag (100) is attached to or part of;
- sending the communication packets by the tag (100) at a second sending rate, the second sending rate being higher or lower than the first sending rate, after a change in the motion state of the tag (100) and/or a change in the use state of the power tool has been detected by the monitoring.

7. The method according to claim 6, wherein
- a lower sending rate is increased to a higher sending rate, if the motion state of the tag (100) changes from not moving to moving (410); and
- the higher sending rate is decreased to the lower sending rate, if the motion state of the tag (100) changes from moving to not moving (420).

8. The method according to claim 6, wherein
- a lower sending rate is increased to a higher sending rate for a predetermined first time period, if the motion state of the tag (100) changes from not moving to moving (410);
- the lower sending rate is increased to the higher sending rate for a predetermined second time period, if the motion state of the tag (100) changes from moving to not moving (420); and
- the higher sending rate is decreased to the lower sending rate after the predetermined first and/or second time period.

9. The method according to claim 7 or 8, wherein
- the lower sending rate is not increased and/or the higher sending rate is not decreased for a predetermined waiting period, after the change of the motion state of the tag (100) has been detected, in particular, wherein the lower sending rate is not increased for the waiting period, after the change of the motion state from moving to not moving (420) has been detected; and
- optionally, the lower sending rate is increased and/or the higher sending rate is decreased only if no further change of the motion state of the tag (100) is detected during the waiting period.

10. The method according to any of the claims 6 to 9, wherein
- a higher sending rate is decreased to a lower sending rate, if the use state of the tag (100) changes from not used to used (710); and
- the lower sending rate is increased to the higher sending rate, if the use state of the tag (100) changes from used to not used (720).

11. The method according to claim 6, wherein the
- a higher sending rate is decreased to a lower sending rate for a predetermined third time period, if the use state of the tag (100) changes from used to not used (420);
- the higher sending rate is decreased to the lower sending rate for a predetermined fourth time period, if the use state of the tag (100) changes from not used to used (410); and
- the lower sending rate is increased to the higher sending rate after the predetermined third and/or fourth time period.

12. The method according to claim 10 or 11, wherein
- the higher sending rate is not decreased and/or the lower sending rate is not increased for a predetermined waiting period, after the change of the use state of the tag (100) has been detected, in particular, wherein the lower sending rate is not increased for the waiting period, after the change of the use state from used to not used (720) has been detected; and
- optionally, the lower sending rate is increased and/or the higher sending rate is decreased only if no further change of the motion state of the tag (100) is detected during the waiting period.

13. The method according to any of the claims 6 to 12, particularly used for managing assets (120), further comprising:
- scanning (S120) for communication packets of one or more tags (100), particularly by a gateway (110).

14. The method according to any of the claims 6 to 13, using the tag (100) according to any of the claims 1 to 3, the asset (120) according to claim 4 and/or the asset management system according to claim 5 .

15. A computer program product comprising instructions which, when the program is executed by the one or more processors (340) cause the processors (340) to carry out the method according to any of the claims 6 to 13 with a tag (100) according to any of the claims 1 to 3, an asset (120) according to claim 4 and/or an asset management system according to claim 5.
